# EUROPEAN PATENT SPECIFICATION

(11) **EP 2 608 459 B1**
(45) Date of publication and mention of the grant of the patent: **17.12.2014**
(21) Application number: 11755711.6
(22) Date of filing: 27.04.2011
(51) Int. Cl.: H04L 12/741, H04L 12/713

(54) **ROUTER, VIRTUAL CLUSTER ROUTER SYSTEM AND ESTABLISHING METHOD THEREOF**
ROUTER, VIRTUELLES CLUSTER-ROUTERSYSTEM UND HERSTELLUNGSVERFAHREN DAFÜR
ROUTEUR, SYSTÈME DE ROUTEUR DE GRAPPES VIRTUEL ET PROCÉDÉ D'ÉTABLISSEMENT ASSOCIÉ

(43) Date of publication of application: 26.06.2013
(73) Proprietor: Huawei Technologies Co., Ltd., Shenzhen, Guangdong 518129 (CN)
(72) Inventor: LIU, Enhui, Shenzhen Guangdong 518129 (CN); WANG, Xinping, Shenzhen Guangdong 518129 (CN)
(74) Representative: Lord, Michael
(86) International application number: PCT/CN2011/073383
(87) International publication number: WO 2011/113394

(56) References cited:
- CN-A- 1 595 906
- CN-A- 1 798 105
- CN-A- 101 355 430
- CN-A- 101 841 815
- CN-A- 101 931 587
- US-A1- 2004 013 120
- US-A1- 2004 098 490
- US-A1- 2004 100 904
- US-A1- 2006 106 934
- US-A1- 2011 019 676
- US-B1- 6 496 510

## Description

### FIELD OF THE INVENTION

Embodiments of the present invention relate to communications technologies, and in particular, to a router, a virtual cluster router system, and a method for establishing a virtual cluster router.

### BACKGROUND OF THE INVENTION

With continuous development of the Internet, the router cluster technology came into being. A router cluster means that multiple physically independent routers are connected to form a logically integrated router system. Each of the independent routers is centrally and uniformly managed and all routers operate as one router. This greatly simplifies operation and maintenance of a device.

According to an existing form of router cluster, multiple independent routers generally need to be interconnected in star topology mode by a particular central switching chassis.

The prior art has at least the following disadvantages::

Network interconnection implemented by using a central switching chassis demands a single requirement on a topology between routers in a cluster, which results in limited scale and capacity of a system and a failure in adapting to network scale changes; dedicated switching chassis and dedicated interfaces need to be designed on routers in the cluster to connect to the central switching chassis, and therefore design costs are high and it is difficult to expand.

US6496510B1 discloses a router device with a plurality of router node devices interconnected via internal transmission lines, in which each of the plurality of router node devices comprises a unit for connecting to a plurality of networks; a routing table describing paths via which packets are forwarded; a forwarding unit for forwarding a packet between one network and another, and for forwarding the packet between the network connected to the router node device and the network connected to some other router node device of the router device via some other router node device, according to the routing table; a routing information collection unit for collecting routing information from each router device connected to the network, not via other router node devices, to the router node device to create a routing table in each router device, the routing information being information to be exchanged among router devices, a distribution unit for distributing the collected routing information to other router node devices via the internal transmission lines; and a routing table generation unit for generating the routing table based on the collected routing information and the routing information distributed from the other router node devices.

US2004013120A1 discloses a method and apparatus for routing and forwarding between virtual routers is described. A method in a single network element comprises peering a first virtual router to a second virtual router, wherein the first and second virtual routers have separate address spaces and separate routing tables, distributing a set of one or more routes from the first virtual router to the second virtual router, wherein a first of the set of routes identifies the first virtual router as a next hop of the first route, said first route including a destination, and downloading to a set of one or more forwarding tables, the destination and the next hop.

### SUMMARY OF THE INVENTION

Embodiments of the present invention provide a router, a virtual cluster router system, and a method for establishing a virtual cluster router, which are capable of solving the preceding problems in the prior art. In addition, the virtual cluster router system is capable of implementing separation of control and forwarding, thereby improving flexibility and reliability of network extension.

According to one aspect, the present invention provides a virtual cluster router system, where the system includes a control device and at least two forwarding Routers; the at least two forwarding Routers establish communication with other network devices outside the system through respective external interfaces; control management channels are established between the control device and the at least two forwarding Routers, wherein the establishing control management channels between the control device and the at least two forwarding Routers specifically comprises: establishing control management channels between the control device and the at least two forwarding Routers through a switch; the control device is configured to collect control protocol information that is sent by other network devices outside the system and received by each external interface of the virtual cluster router system, and perform centralized calculation to generate an external routing information base of the virtual cluster router system; the control device performs control protocol communication with another router outside the system on behalf of the virtual cluster router system, so that the virtual cluster router system is externally embodied as one router at the control protocol layer; the control device is further configured to collect control protocol information between each of the forwarding Routers and the control device in the virtual cluster router system, and perform centralized calculation to generate an internal routing information base of the virtual cluster router system; and the control device combines the external routing information base of the system and the internal routing information base of the system to generate a final forwarding information base, and sends the final forwarding information base to the at least two forwarding Routers through the control management channels.

According to another aspect, the present invention provides a router, where the router is applied to the virtual cluster router system described above, and a control management channel is established between the router and the control device in the system; the router includes a message processing module and a sending module: the message processing module is configured to, when receiving a message including a control protocol where the message is sent from the outside of the virtual cluster router system, extract a destination card identifier in the message, and send the message to the sending module if the destination card identifier is on the control device; and the sending module is configured to receive the message and send the message to the control device through the established control management channel.

According to another aspect, the present invention further provides a control device, where the control device is applied to the virtual cluster router system described in claim 1, and control management channels are established between the control device and at least two forwarding Routers in the system; the at least two forwarding Routers establish communication with other network devices outside the system through respective external interfaces; and
the control device comprises:
a forwarding information base collection module, configured to collect control protocol information that is sent by other network devices outside the system and received by each external interface of the virtual cluster router system, and perform centralized calculation to generate an external routing information base of the virtual cluster router system, so that the virtual cluster router system is externally embodied as one router at the control protocol layer; and collect control protocol information between each of the forwarding Routers and the control device in the virtual cluster router system, and perform centralized calculation to generate an internal routing information base of the virtual cluster router system, wherein the establishing control management channels between the control device and the at least two forwarding Routers specifically comprises: establishing control management channels between the control device and the at least two forwarding Routers through a switch;
a combination module, configured to combine the external routing information base of the system and the internal routing information base of the system to generate a final forwarding information base; and
a sending module, configured to send the final forwarding information base to the at least two forwarding Routers through the control management channels.

According to still another aspect, the present invention provides a method for establishing a virtual cluster router system, where the method is applied to the virtual cluster router system described above, and the virtual cluster router system includes a control device and at least two forwarding routers Router; the method includes: establishing control management channels between the control device and the at least two forwarding Routers, wherein the establishing control management channels between the control device and the at least two forwarding Routers specifically comprises: establishing control management channels between the control device and the at least two forwarding Routers through a switch; collecting, by the control device, control protocol information that is sent by other network devices outside the system and received by each external interface of the virtual cluster router system, and performing centralized calculation to generate an external routing information base of the virtual cluster router system; performing, by the control device, control protocol communication with another router outside the system on behalf of the virtual cluster router system, so that the virtual cluster router system is externally embodied as one router at the control protocol layer; further collecting, by the control device, control protocol information between each of the forwarding Routers and the control device in the virtual cluster router system, and performing centralized calculation to generate an internal routing information base of the virtual cluster router system; and combining, by the control device, the external routing information base of the system and the internal routing information base of the system to generate a final forwarding information base, and sending the final forwarding information base to the at least two forwarding Routers through the control management channels.

It can be seen that according to the router, the virtual cluster router system, and the method for establishing a virtual cluster router system that are provided in the embodiments of the present invention, a topology in the virtual cluster router system is not limited and any topology such as star topology, tree topology, ring topology, FullMesh topology, or mixed topology can be supported. Forwarding routers in the virtual cluster router system can be connected through a standard interface. In this way, costs are reduced and an existing routing protocol does not need to be modified for a network outside the virtual cluster router system. In addition, function distinction is performed using a control device and forwarding routers, thereby implementing separation of control and forwarding and improving flexibility and reliability of network extension.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic diagram of establishing a control management channel according to an embodiment of the present invention;
FIG. 2-1 is a schematic diagram of a virtual cluster router system with a star topology according to an embodiment of the present invention;
FIG. 2-2 is a schematic diagram of a virtual cluster router system with a tree topology according to an embodiment of the present invention;

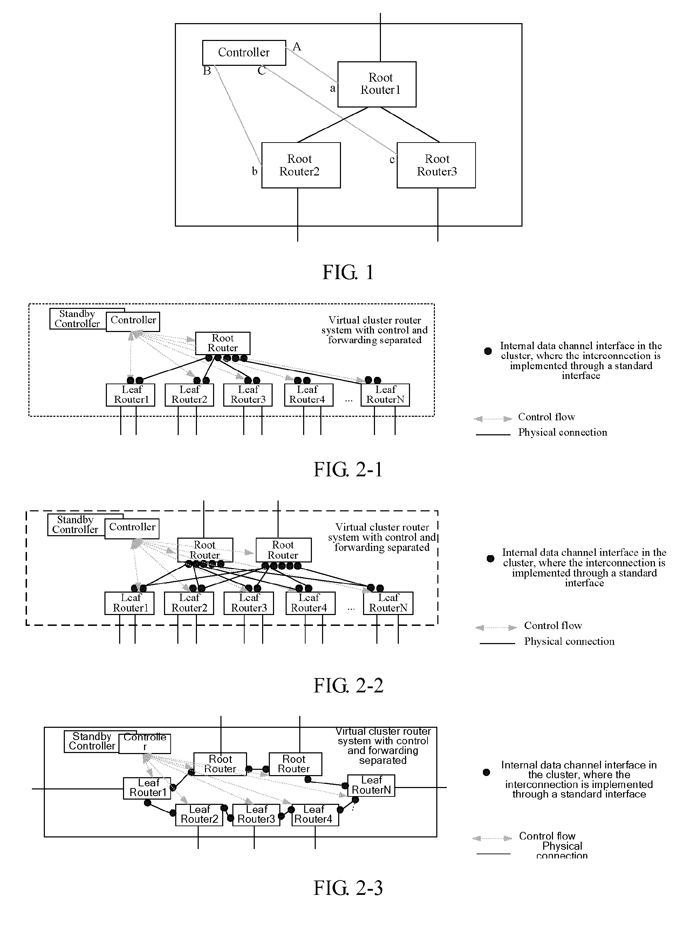

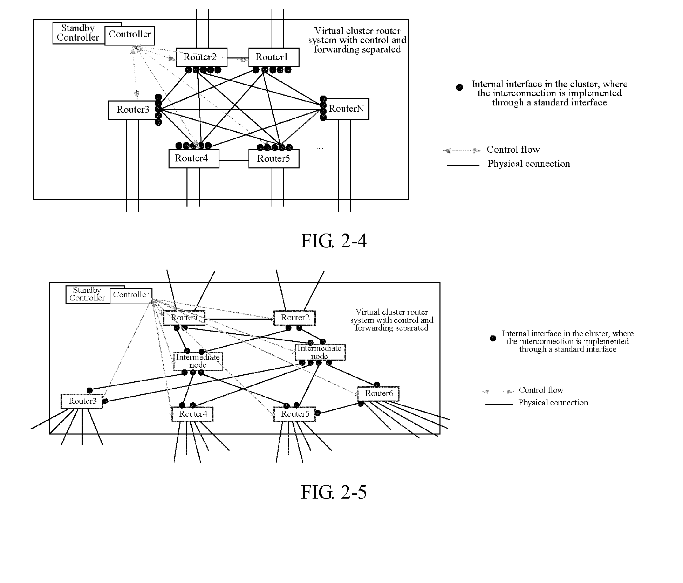

FIG. 2-3 is a schematic diagram of a virtual cluster router system with a ring topology according to an embodiment of the present invention;
FIG. 2-4 is a schematic diagram of a virtual cluster router system with a FullMesh topology according to an embodiment of the present invention; and
FIG. 2-5 is a schematic diagram of a virtual cluster router system with a random topology according to an embodiment of the present invention.

### DETAILED DESCRIPTION OF THE EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

### Embodiment 1

An embodiment of the present invention provides a virtual cluster router system, where the system includes a control device Controller and at least two forwarding routers Router; and the at least two forwarding Routers establish communication with other network devices outside the system through respective external interfaces.

Control management channels are established between the control device and the at least two forwarding Routers.

The control device is configured to collect control protocol information that is sent by other network devices outside the system and received by each external interface of the virtual cluster router system, and perform centralized calculation to generate an external routing information base of the virtual virtual cluster router system; and the control device performs control protocol communication with another router outside the system on behalf of the virtual cluster router system, so that the virtual cluster router system is externally embodied as one router at the control protocol layer.

The control device is further configured to collect control protocol information between each of the forwarding Routers and the control device in the virtual cluster router system, and perform centralized calculation to generate an internal routing information base of the virtual cluster router system.

The control device combines the external routing information base of the system and the internal routing information base of the system to generate a final forwarding information base, and sends the final forwarding information base to the at least two forwarding Routers through the control management channels.

During specific implementation of this embodiment of the present invention, the control device may collect the control protocol information that is sent by other network devices outside the system and received by each external interface of the virtual cluster router system or the control protocol information between each of the forwarding Routers and the control device in the virtual cluster router system through static configuration or the control management channels. Further, a manner for the control device to collect the information through the control management channels may be as follows:

The at least two forwarding Routers are configured to, when receiving a message including a control message where the message is sent from the outside of the virtual cluster router system, extract a destination card identifier in the message, and send the message to the control device through the established control management channels if the destination card identifier is on the control device.

Alternatively, the at least two forwarding Routers send control protocol information initiated by each of the two forwarding Routers to the control device through the control management channels.

During specific implementation of this embodiment of the present invention, the preceding functions need to be specifically determined to be enabled on the control device and each of the forwarding Routers according to a specific physical form of the control device to implement a communication connection in the virtual cluster router system provided in this embodiment of the present invention. For ease of description, it may be considered that communication agents are installed on the control device and each of the forwarding Routers or a communication agent is installed on each of the forwarding Routers, that is, the preceding functions are implemented by the communication agents.

It should be noted that enabling the preceding functions on a forwarding Router specifically refers to enabling the preceding functions on an interconnection interface board where an interface, on the forwarding Router side, of a control management channel between the forwarding Router and the control device is located.

During specific implementation of enabling the preceding functions on the control device, the preceding functions may be enabled on an interconnection interface board where an interface, on the control device side, of a control management channel between the control device and each of the forwarding Routers is located. When an interface, on the control device side, of a control management channel between the control device and each of the forwarding Routers is located on a main board MPU, the preceding functions do not need to be enabled.

Further, during specific implementation of this embodiment of the present invention, the following are configured on the control device: an identifier of the control device, an identifier of an interface, on the control device side, of a control management channel between the control device and each of the forwarding Routers and an IP address of the interface, an identifier of each of the forwarding Routers, and an identifier of an interface, on a forwarding Router side, of a control management channel between the control device and each of the forwarding Routers and an IP address of the interface.

The following are configured on the at least two forwarding Routers: an identifier of each of the forwarding Routers, an IP address of an interface, on the control device side, of a control management channel between each of the forwarding Routers and the control device, and an identifier of an interface, on a forwarding Router side, of a control management channel between each of the forwarding Routers and the control device and an IP address of the interface.

A topology of the at least two forwarding Routers is at least one or any combination of the following topologies: star topology, tree topology, ring topology, and full mesh FullMesh topology. The forwarding Routers are interconnected through a standard interface to form a cluster with a star/tree/ring topology. A standard internal interface may be a GE/10GE Ethernet interface, a POS interface, and the like. The cluster is externally embodied as one router at an IP protocol control layer. A Root Router serves as a root node of the star/tree/ring topology, and a Leaf Router serves as a leaf node of the star/tree/ring topology. When the topology of the at least two forwarding Routers is a random topology, an intermediate node may be a Router, a Switch, an optical transmission device, and the like.

When the topology of the at least two forwarding Routers is a star, tree, or ring topology, the following are further configured on the control device: a type of a topology for interconnecting the forwarding Routers in the virtual cluster router system, and a topology role of each of the forwarding Routers; and the following is further configured on the at least two forwarding Routers: a topology role of each of the forwarding Routers. For example, the type of the topology is a star topology, a topology role of a root node in a tree or ring topology may be defined as a Root Router, and a topology role of a leaf node in a tree or ring topology may be defined as a Leaf Router. For clarity of description, a star topology with three forwarding Routers is taken as an example. Refer to FIG. 1. FIG. 1 is a schematic diagram of establishing a control management channel according to an embodiment of the present invention. In FIG. 1, a Controller is the control device in this application, and Root Router1, Leaf Router2, and Leaf Router3 are the forwarding Routers.

At least the following information is configured on the control device:
an identifier of the control device, an identifier of interface A on the control device and an IP address of interface A, an identifier of interface B on the control device and an IP address of interface B, an identifier of interface C on the control device and an IP address of interface C, a star topology, an identifier of forwarding Router1, information that forwarding Router1 is a Root Router, an identifier of forwarding Router2, information that forwarding Router2 is a Leaf Router, an identifier of forwarding Router3, information that forwarding Router3 is a Leaf Router, an identifier of interface a on forwarding Router1 and an IP address of interface a, an identifier of interface b on forwarding Router2 and an IP address of interface b, and an identifier of interface c on forwarding Router3 and an IP address of interface c.

The following information is configured on forwarding Router1:
the identifier of forwarding Router 1, the information that forwarding Router1 is a Root Router, the identifier of interface a on forwarding Router1 and the IP address of interface a, and the identifier of interface A on the control device and the IP address of interface A.

The following information is configured on forwarding Router2:
the identifier of forwarding Router2, the information that forwarding Router2 is a Leaf Router, the identifier of interface b on forwarding Router2 and the IP address of interface b, and the identifier of interface B on the control device and the IP address of interface B.

The following information is configured on forwarding Router3:
the identifier of forwarding Router3, the information that forwarding Router3 is a Leaf Router, the identifier of interface c on forwarding Router3 and the IP address of interface c, and the identifier of interface C on the control device and the IP address of interface C.

The foregoing describes establishing a control management channel between the control device and each of the forwarding Routers.

Further, to implement uniform management of the control device on an interface of each of the forwarding Routers, the at least two forwarding Routers each include: an interface information reporting module, configured to report interface information to the control device, where the interface information includes information about all interfaces connecting a forwarding router and the outside of the virtual cluster router system, and information about all interfaces connecting the forwarding router and the inside of the virtual cluster router system.

The control device includes: an interface management module, configured to receive the interface information reported by the at least two forwarding Routers and save the interface information.

In addition, during specific implementation of this embodiment of the present invention, a manner for connecting the control device and each of the forwarding Routers is not limited in the present invention. For example, the control management channels are implemented in in-band or out-band manner. When the control management channels are implemented in in-band manner, the control device needs to further configure static routes from the control device to the at least two forwarding Routers; and the at least two forwarding Routers need to further configure static routes from the forwarding Routers to the control device.

Further, when no interconnection interface board exists in the control device, the control device establishes the control management channels with each of the forwarding Routers through a switch. When the control device includes a main board and an interconnection interface board, the establishing control management channels between the control device and the at least two forwarding Routers specifically includes: establishing control management channels between the interconnection interface board of the control device and the at least two forwarding Routers, where the interconnection interface board is configured to receive the message, extract the destination card identifier in the message, and if the destination card identifier is on the control device, send the message to the main board for processing the message.

The foregoing describes an embodiment about how to establish a virtual cluster router system. For ease of describing the virtual cluster router system, for details, reference may be made to FIG. 2-1 to FIG. 2-5. FIG. 2-1 is a schematic diagram of a virtual cluster router system with a star topology according to an embodiment of the present invention. FIG. 2-2 is a schematic diagram of a virtual cluster router system with a tree topology according to an embodiment of the present invention. FIG. 2-3 is a schematic diagram of a virtual cluster router system with a ring topology according to an embodiment of the present invention. FIG. 2-4 is a schematic diagram of a virtual cluster router system with a FullMesh topology according to an embodiment of the present invention. FIG. 2-5 is a schematic diagram of a virtual cluster router system with a random topology according to an embodiment of the present invention. A Controller in the figures is the control device in this application. A Root Router is a root node among the forwarding routers, and a Leaf Router is a leaf node among the forwarding routers. A dashed line indicates a control flow sent between the control device and each of the forwarding Routers through an established control management channel, and a solid line indicates a practical physical connection between forwarding Routers. A solid point indicates an internal interface in the virtual cluster router system. The interconnection is implemented through a standard interface. The forwarding Routers establish communication with other network devices outside the system through external interfaces.

Persons of ordinary skill in the art may perform protocol adaptation in a virtual cluster router system based on the virtual cluster router system described in this embodiment of the present invention, so that multiple control protocols such as IP, MPLS, and VPN are supported. In this way, the virtual cluster router system is embodied as one router at the protocol control layer. The following takes a virtual cluster router system supporting IP service forwarding as an example for description. To support IP service forwarding in the virtual cluster router system, the control device specifically includes: a forwarding information base collection module, configured to collect route control protocol information that is sent by other network devices outside the system and received by each external interface of the virtual cluster router system, and perform centralized calculation to generate an external routing information base eFIB of the virtual cluster router system; and collect control protocol information between each of the forwarding Routers and the control device in the virtual cluster router system, acquire information about an internal interconnection topology between each of the forwarding Routers, and perform centralized calculation to generate an internal routing information base iFIB of the virtual cluster router system, where the iFIB includes: a node ID of each of the forwarding Routers, an ID of an internal interface of a data channel, and an IP address of the internal interface, and the eFIB includes: an identifier of an external interface of each of the forwarding Routers and an IP address of the external interface; a combination module, configured to combine the iFIB and the eFIB to generate a final forwarding information base of the virtual cluster router system; and
a sending module, configured to send the final forwarding information base of the virtual cluster router system to the at least two forwarding Routers through the control management channels.

The combination module further includes:
a forwarding information acquiring unit, configured to acquire, according to information about an external interface in the eFIB, a forwarding Router where the external interface is located; and acquire information about a route to the forwarding Router where the external interface is located from the iFIB; and
a forwarding information combination unit, configured to combine a destination address corresponding to the information about the external interface in the eFIB and the information about the route to the forwarding Router where the external interface is located in the iFIB into a final forwarding information base of the virtual cluster router system.

During specific implementation of this embodiment of the present invention, to establish the iFIB, the control device needs to configure at least information such as an identifier of each of the forwarding Routers, an identifier of an internal interface of a data channel of each of the forwarding Routers, and the IP address of the internal interface to establish and maintain an internal topology database of the cluster.

Further, for the purpose of supporting multiple topologies between the forwarding Routers in the virtual cluster router system, if the type of the topology for interconnecting the forwarding Routers is a topology with a root node, such as star topology, tree topology, and ring topology, the following information needs to be further configured on a forwarding information base establishment module: the type of the topology for interconnecting the forwarding Routers in the virtual cluster router system, and a topology role of each of the forwarding Routers.

Further, regarding different topologies of the virtual cluster, different methods are available for generating the iFIB. Regarding a Fat-tree or FullMesh topology, the iFIB can be generated by using the Intermediate-System to Intermediate-System (Intermediate-System to Intermediate-System, ISIS) protocol and transparent interconnection of lots of links (Transparent Interconnection of Lots of Links, TRILL) encapsulation.

The control device centrally calculates and aggregates iFIBs of each of the forwarding Routers and sends them to each Router node through a control channel.

It should be noted that the generation of the iFIB may be implemented through centralized calculation performed by the control device or through calculation performed by each of the forwarding Routers.

It should be noted that the combination of the eFIB and the iFIB may be centrally completed by the control device or completed by each of the forwarding Routers.

In this way, the virtual cluster router system can be externally embodied as one router at the IP protocol control layer.

Further, for the purpose of improving reliability and implementing load sharing, in this embodiment of the present invention, two control nodes Controller may be generated in the cluster through static configuration or protocol election to form an active/standby relationship.

It can be seen that according to the virtual cluster router system provided in this embodiment of the present invention, a topology in the virtual cluster router system is not limited and any topology such as star topology, tree topology, ring topology, FullMesh topology, or mixed topology can be supported. Forwarding routers in the virtual cluster router system can be connected through a standard interface. In this way, costs are reduced and an existing routing protocol does not need to be modified for a network outside the virtual cluster router system. In addition, function distinction is performed using a control device and forwarding routers, thereby implementing separation of control and forwarding and improving flexibility and reliability of network extension.

### Embodiment 2

An embodiment of the present invention further provides a router, where the router is applied to the preceding virtual cluster router system, and a control management channel is established between the router and a control device in the system.

The router includes a message processing module and a sending module.

The message processing module is configured to, when receiving a message including a control protocol where the message is sent from the outside of the virtual cluster router system, extract a destination card identifier in the message, and send the message to the sending module if the destination card identifier is on the control device.

The sending module is configured to receive the message and send the message to the control device through the established control management channel.

The following are configured on the router: an identifier of the router, an IP address of an interface, on the control device side, of the control management channel between the router and the control device, and an identifier of an interface, on the forwarding Router side, of the control management channel between the router and the control device and an IP address of the interface.

Further, to support multiple topologies between forwarding Routers in a virtual cluster router system, the router needs to further configure a topology role thereof if a type of a topology for interconnecting the forwarding Routers is a topology with a root node, such as star topology, tree topology, and ring topology.

In addition, during specific implementation of this embodiment of the present invention, a manner for connecting the control device and each of the forwarding Routers is not limited in the present invention. The control management channel is implemented in in-band or out-band manner. When the control management channel is implemented in in-band manner, the router needs to further configure a static route from to the control device.

Further, to implement uniform management of the control device on an interfaces of each of the forwarding Routers, the router further includes: an interface information reporting module, configured to report interface information to the control device, where the interface information includes information about all interfaces connecting the router and the outside of the virtual cluster router system, and information about all interfaces connecting the router and the inside of the virtual cluster router system.

It should be noted that the router provided in Embodiment 2 is applied to the preceding virtual cluster router system. The router in this embodiment is a forwarding Router in the preceding virtual cluster router system. Therefore, the router in Embodiment 2 can be specifically implemented by referring to the function implementation of the forwarding Router in Embodiment 1.

### Embodiment 3

Embodiment 3 of the present invention further provides a control device, where the control device is applied to the virtual cluster router system described above, and control management channels are established between the control device and at least two forwarding Routers in the system. The at least two forwarding Routers establish communication with other network devices outside the system through respective external interfaces.

The control device includes:
a forwarding information base collection module, configured to collect control protocol information that is sent by other network devices outside the system and received by each external interface of the virtual cluster router system, and perform centralized calculation to generate an external routing information base of the virtual cluster router system, so that the virtual cluster router system is externally embodied as one router at the control protocol layer; and collect control protocol information between each of the forwarding Routers and the control device in the virtual cluster router system system, and perform centralized calculation to generate an internal routing information base of the virtual cluster router system;
a combination module, configured to combine the external routing information base of the system and the internal routing information base of the system to generate a final forwarding information base; and
a sending module, configured to send the final forwarding information base to the at least two forwarding Routers through the control management channels.

The following are configured on the control device: an identifier of the control device, an identifier of an interface, on the control device side, of a control management channel between the control device and each of the forwarding Routers and an IP address of the interface, an identifier of each of the forwarding Routers, and an identifier of an interface, on a forwarding Router side, of a control management channel between the control device and each of the forwarding Routers and an IP address of the interface.

When the topology of the at least two forwarding Routers is a star, tree, or ring topology, the following are further configured on the control device: a type of a topology for interconnecting the forwarding Routers in the virtual cluster router system, and a topology role of each of the forwarding Routers.

The establishing control management channels between the control device and the at least two forwarding Routers specifically includes: establishing control management channels between the control device and the at least two forwarding Routers through a switch.

The control device includes a main processing board and an interconnection interface board.

Accordingly, the establishing control management channels between the control device and the at least two forwarding Routers specifically includes: establishing control management channels between the interconnection interface board of the control device and the at least two forwarding Routers.

The control management channels are implemented in in-band or out-band manner. When the control management channels are implemented in in-band manner, the control device needs to further configure static routes from the control device to the at least two forwarding Routers.

The control protocol includes: the IP protocol, the MPLS protocol, or the VPN protocol.

When the control protocol is the IP protocol, the forwarding information base collection module is specifically configured to collect route forwarding information that is sent by other network devices outside the system and received by each external interface of the virtual cluster router system, and perform centralized calculation to generate an external routing information base eFIB of the virtual cluster router system; and collect control protocol information between each of the forwarding Routers and the control device in the virtual cluster router system, and perform centralized calculation to generate an internal routing information base iFIB of the virtual cluster router system, where the iFIB includes: a node ID of each of the forwarding Routers, an ID of an internal interface of a data channel, and an IP address of the internal interface, and the eFIB includes: an identifier of an external interface of each of the forwarding Routers and an IP address of the external interface;
the combination module is specifically configured to combine the iFIB and the eFIB to generate a final forwarding information base of the virtual cluster router system; and
the sending module is specifically configured to send the final forwarding information base of the virtual cluster router system to the at least two forwarding Routers through the control management channels.

The combination module further includes:
a forwarding information acquiring unit, configured to acquire, according to information about an external interface in the eFIB, a forwarding Router where the external interface is located; and acquire information about a route to the forwarding Router where the external interface is located from the iFIB; and
a forwarding information combination unit, configured to combine a destination address corresponding to the information about the external interface in the eFIB and the information about the route to the forwarding Router where the external interface is located in the iFIB into a final forwarding information base of the virtual cluster router system.

The control device further includes: an interface management module, configured to receive the interface information reported by the at least two forwarding Routers and save the interface information.

It can be seen that the control device provided in this embodiment of the present invention is applied to a virtual cluster router system. A topology in the virtual cluster router system is not limited in the system and any topology such as star topology, tree topology, ring topology, full mesh FullMesh topology, or mixed topology can be supported. Forwarding routers in the virtual cluster router system can be connected through a standard interface. In this way, costs are reduced and an existing routing protocol does not need to be modified for a network outside the virtual cluster router system. In addition, function distinction is performed using a control device and forwarding routers, thereby implementing separation of control and forwarding and improving flexibility and reliability of network extension.

### Embodiment 4

Embodiment 4 of the present invention provides a method for establishing a virtual cluster router system, where the method is applied to the virtual cluster router system described in claim 1. The virtual cluster router system includes a control device and at least two forwarding routers Router.

The method includes the following:
establish control management channels between the control device and the at least two forwarding Routers;
the control device collects control protocol information that is sent by other network devices outside the system and received by each external interface of the virtual cluster router system, and performs centralized calculation to generate an external routing information base of the virtual cluster router system; the control device performs control protocol communication with another router outside the system on behalf of the virtual cluster router system, so that the virtual cluster router system is externally embodied as one router at the control protocol layer;
the control device further collects control protocol information between each of the forwarding Routers and the control device in the virtual cluster router system, and performs centralized calculation to generate an internal protocol information base of the virtual cluster router system; and
the control device combines the external routing information base of the system and the internal routing information base of the system to generate a final forwarding information base, and sends the final forwarding information base to the at least two forwarding Routers through the control management channels.

It can be seen that the method for establishing a virtual cluster router system provided in this embodiment of the present invention is applied to a virtual cluster router system. A topology in the virtual cluster router system is not limited in the method and any topology such as star topology, tree topology, ring topology, FullMesh topology, or mixed topology can be supported. Forwarding routers in the virtual cluster router system can be connected through a standard interface. In this way, costs are reduced and an existing routing protocol does not need to be modified for a network outside the virtual cluster router system. In addition, function distinction is performed using a control device and forwarding routers, thereby implementing separation of control and forwarding and improving flexibility and reliability of network extension.

Persons of ordinary skills in the art may understand that all or part of steps in the embodiments of the present invention may be implemented by a program instructing relevant hardware. The program may be stored in a computer readable storage medium. When the programs are run, the foregoing steps of the methods in the embodiments are performed. The foregoing storage medium includes various media capable of storing program codes, such as a ROM, a RAM, a magnetic disk or an optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof, without departing from the and scope of the technical solutions of the embodiments of the present invention.

## Claims

1. A virtual cluster router system, comprising a control device and at least two forwarding routers Router, wherein the at least two forwarding Routers establish communication with other network devices outside the system through respective external interfaces;
control management channels are established between the control device and the at least two forwarding Routers, wherein the establishing control management channels between the control device and the at least two forwarding Routers specifically comprises: establishing control management channels between the control device and the at least two forwarding Routers through a switch;
the control device is configured to collect control protocol information that is sent by other network devices outside the system and received by each external interface of the virtual cluster router system, and perform centralized calculation to generate an external routing information base of the virtual cluster router system; the control device performs control protocol communication with another router outside the system on behalf of the virtual cluster router system, wherein the virtual cluster router system is externally embodied as one router at the control protocol layer;
the control device is further configured to collect control protocol information between each of the forwarding Routers and the control device in the virtual cluster router system, and perform centralized calculation to generate an internal routing information base of the virtual cluster router system; and
the control device is configured to combine the external routing information base of the system and the internal routing information base of the system to generate a final forwarding information base, and sends the final forwarding information base to the at least two forwarding Routers through the control management channels.

2. The system according to claim 1, wherein the collecting control protocol information that is sent by other network devices outside the system and received by each external interface of the virtual cluster router system specifically comprises:
extracting, by the at least two forwarding Routers, when receiving a message comprising a control protocol wherein the message is sent from the outside of the virtual cluster router system, a destination card identifier in the message, and sending the message to the control device through the established control management channels if the destination card identifier is on the control device.

3. The system according to claim 1, wherein the following are configured on the control device: an identifier of the control device, an identifier of an interface, on the control device side, of a control management channel between the control device and each of the forwarding Routers and an IP address of the interface, an identifier of each of the forwarding Routers, and an identifier of an interface, on a forwarding Router side, of a control management channel between the control device and each of the forwarding Routers and an IP address of the interface; and
the following are configured on the at least two forwarding Routers: an identifier of each of the forwarding Routers, an IP address of an interface, on the control device side, of a control management channel between each of the forwarding Routers and the control device, and an identifier of an interface, on a forwarding Router side, of a control management channel between each of the forwarding Routers and the control device and an IP address of the interface.

4. The system according to claim 1, wherein the at least two forwarding Routers establish a topology through a standard interface.

5. The system according to claim 1, wherein the control device comprises a main board and an interconnection interface board; and
accordingly, the establishing control management channels between the control device and the at least two forwarding Routers specifically comprises: establishing control management channels between the interconnection interface board of the control device and the at least two forwarding Routers.

6. The system according to claim 1, wherein the control management channels are implemented in in-band or out-band manner; and when the control management channels are implemented in in-band manner, the control device needs to further configure static routes from the control device to the at least two forwarding Routers; and each of the at least two forwarding Routers need to further configure static routes from the each router to the control device.

7. The system according to claim 1, wherein the control device specifically comprises: a forwarding information base collection module, configured to collect routing information that is sent by other network devices outside the system and received by each external interface of the virtual cluster router system, and perform centralized calculation to generate an external routing information base eFIB of the virtual cluster router system; and collect routing information between each of the forwarding Routers and the control device in the virtual cluster router system, and perform centralized calculation to generate an internal routing information base iFIB of the virtual cluster router system, wherein the iFIB comprises: a node ID of each of the forwarding Routers, an ID of an internal interface of a data channel, and an IP address of the internal interface, and the eFIB comprises: an identifier of an external interface of each of the forwarding Routers and an IP address of the external interface;
a combination module, configured to combine the iFIB and the eFIB to generate a final forwarding information base of the virtual cluster router system; and
a sending module, configured to send the final forwarding information base of the virtual cluster router system to the at least two forwarding Routers through the control management channels.

8. The system according to claim 7, wherein the combination module further comprises:
a forwarding information acquiring unit, configured to acquire, according to information about an external interface in the eFIB, a forwarding Router where the external interface is located; and acquire information about a route to the forwarding Router where the external interface is located from the iFIB; and
a forwarding information combination unit, configured to combine a destination address corresponding to the information about the external interface in the eFIB and the information about the route to the forwarding Router where the external interface is located in the iFIB into a final forwarding information base of the virtual cluster router system.

9. The system according to claim 1, wherein each of the at least two forwarding Routers further comprises: an interface information reporting module, configured to report interface information to the control device, wherein the interface information comprises information about all interfaces connecting a forwarding router and the outside of the virtual cluster router system, and information about all interfaces connecting the forwarding router and the inside of the virtual cluster router system; and
the control device further comprises: an interface management module, configured to receive the interface information reported by the at least two forwarding Routers and save the interface information.

10. A control device, wherein the control device is applied to the virtual cluster router system described in claim 1, and control management channels are established between the control device and at least two forwarding Routers in the system; the at least two forwarding Routers establish communication with other network devices outside the system through respective external interfaces; and
the control device comprises:
a forwarding information base collection module, configured to collect control protocol information that is sent by other network devices outside the system and received by each external interface of the virtual cluster router system, and perform centralized calculation to generate an external routing information base of the virtual cluster router system, wherein the virtual cluster router system is externally embodied as one router at the control protocol layer; and collect control protocol information between each of the forwarding Routers and the control device in the virtual cluster router system, and perform centralized calculation to generate an internal routing information base of the virtual cluster router system, wherein the establishing control management channels between the control device and the at least two forwarding Routers specifically comprises: establishing control management channels between the control device and the at least two forwarding Routers through a switch;
a combination module, configured to combine the external routing information base of the system and the internal routing information base of the system to generate a final forwarding information base; and
a sending module, configured to send the final forwarding information base to the at least two forwarding Routers through the control management channels.

11. The control device according to claim 10, wherein the following are configured on the control device: an identifier of the control device, an identifier of an interface, on the control device side, of a control management channel between the control device and each of the forwarding Routers and an IP address of the interface, an identifier of each of the forwarding Routers, and an identifier of an interface, on a forwarding Router side, of a control management channel between the control device and each of the forwarding Routers and an IP address of the interface.

12. The control device according to claim 10, wherein the control device comprises a main board and an interconnection interface board; and
accordingly, the establishing control management channels between the control device and the at least two forwarding Routers specifically comprises: establishing control management channels between the interconnection interface board of the control device and the at least two forwarding Routers.

13. The control device according to claim 10, wherein the control management channels are implemented in in-band or out-band manner; and when the control management channels are implemented in in-band manner, the control device needs to further configure static routes from the control device to the at least two forwarding Routers.

14. The control device according to claim 10, wherein the forwarding information base collection module is specifically configured to collect routing information that is sent by other network devices outside the system and received by each external interface of the virtual cluster router system, and perform centralized calculation to generate an external routing information base eFIB of the virtual cluster router system; and collect routing information between each of the forwarding Routers and the control device in the virtual cluster router system, and perform centralized calculation to generate an internal routing information base iFIB of the virtual cluster router system, wherein the iFIB comprises: a node ID of each of the forwarding Routers, an ID of an internal interface of a data channel, and an IP address of the internal interface, and the eFIB comprises: an identifier of an external interface of each of the forwarding Routers and an IP address of the external interface;
the combination module is specifically configured to combine the iFIB and the eFIB to generate a final forwarding information base of the virtual cluster router system; and
the sending module is specifically configured to send the final forwarding information base of the virtual cluster router system to the at least two forwarding Routers through the control management channels.

15. The control device according to claim 14, wherein the combination module further comprises:
a forwarding information acquiring unit, configured to acquire, according to information about an external interface in the eFIB, a forwarding Router where the external interface is located; and acquire information about a route to the forwarding Router where the external interface is located from the iFIB; and
a forwarding information combination unit, configured to combine a destination address corresponding to the information about the external interface in the eFIB and the information about the route to the forwarding Router where the external interface is located in the iFIB into a final forwarding information base of the virtual cluster router system.

16. The control device according to claim 10, wherein the control device further comprises: an interface management module, configured to receive the interface information reported by the at least two forwarding Routers and save the interface information.

17. A method for establishing a virtual cluster router system, wherein the method is applied to the virtual cluster router system described in claim 1, and the virtual cluster router system comprises a control device and at least two forwarding routers Router; and
the method comprises:
establishing control management channels between the control device and the at least two forwarding Routers, wherein the establishing control management channels between the control device and the at least two forwarding Routers specifically comprises: establishing control management channels between the control device and the at least two forwarding Routers through a switch;
collecting, by the control device, control protocol information that is sent by other network devices outside the system and received by each external interface of the virtual cluster router system, and performing centralized calculation to generate an external routing information base of the virtual cluster router system; performing, by the control device, control protocol communication with another router outside the system on behalf of the virtual cluster router system, wherein the virtual cluster router system is externally embodied as one router at the control protocol layer;
further collecting, by the control device, control protocol information between each of the forwarding Routers and the control device in the virtual cluster router system, and performing centralized calculation to generate an internal routing information base of the virtual cluster router system; and
combining, by the control device, the external routing information base of the system and the internal routing information base of the system to generate a final forwarding information base, and sending the final forwarding information base to the at least two forwarding Routers through the control management channels.

## Patentansprüche

1. Virtuelles Clusterroutersystem, das eine Steuervorrichtung und wenigstens zwei Weiterleitungsrouter umfasst, wobei die wenigstens zwei Weiterleitungsrouter eine Kommunikation mit anderen Netzvorrichtungen außerhalb des Systems durch entsprechende externe Schnittstellen aufbauen;
Steuermanagementkanäle zwischen der Steuervorrichtung und den wenigstens zwei Weiterleitungsroutern aufgebaut sind, wobei das Aufbauen der Steuermanagementkanäle zwischen der Steuervorrichtung und den wenigstens zwei Weiterleitungsroutern insbesondere Folgendes umfasst: Aufbauen von Steuermanagementkanälen zwischen der Steuervorrichtung und den wenigstens zwei Weiterleitungsroutern über einen Verteiler;
die Steuervorrichtung konfiguriert ist, Steuerprotokollinformationen, die durch andere Netzvorrichtungen außerhalb des Systems gesendet werden und durch jede externe Schnittstelle des virtuellen Clusterroutersystems empfangen werden, zu sammeln und zentralisierte Berechnung auszufiihren, um eine externe Lenkungsinformationsbasis des virtuellen Clusterroutersystems zu erzeugen; die Steuervorrichtung Steuerprotokollkommunikation mit einem weiteren Router außerhalb des Systems für das virtuelle Clusterroutersystem ausfiihrt, wobei das virtuelle Clusterroutersystem extern als ein Router in der Steuerprotokollschicht verkörpert ist;
die Steuervorrichtung ferner konfiguriert ist, Steuerprotokollinformationen zwischen jedem der Weiterleitungsrouter und der Steuervorrichtung in dem virtuellen Clusterroutersystem zu sammeln und zentralisierte Berechnung auszuführen, um eine interne Lenkungsinformationsbasis des virtuellen Clusterroutersystems zu erzeugen;
und
die Steuervorrichtung konfiguriert ist, die externe Lenkungsinformationsbasis des Systems und die interne Lenkungsinformationsbasis des Systems zu kombinieren, um eine endgültige Weiterleitungsinformationsbasis zu erzeugen, und die endgültige Weiterleitungsinformationsbasis über die Steuermanagementkanäle zu den wenigstens zwei Weiterleitungsroutern sendet.

2. System nach Anspruch 1, wobei das Sammeln von Steuerprotokollinformationen, die durch andere Netzvorrichtungen außerhalb des Systems gesendet und durch jede externe Schnittstelle des virtuellen Clusterroutersystem empfangen werden, insbesondere Folgendes umfasst:
Extrahieren durch die wenigstens zwei Weiterleitungsrouter, wenn eine Nachricht empfangen wird, die ein Steuerprotokoll umfasst, wobei die Nachricht von außerhalb des virtuellen Clusterroutersystems gesendet wird, einer Zielkartenkennung in der Nachricht und Senden der Nachricht über die aufgebauten Steuermanagementkanäle zu der Steuervorrichtung, falls die Zielkartenkennung auf der Steuervorrichtung ist.

3. System nach Anspruch 1, wobei das Folgende auf der Steuervorrichtung konfiguriert ist: eine Kennung der Steuervorrichtung, eine Kennung einer Schnittstelle auf der Steuervorrichtungsseite eines Steuermanagementkanals zwischen der Steuervorrichtung und jedem der Weiterleitungsrouter und eine IP-Adresse der Schnittstelle, eine Kennung jedes der Weiterleitungsrouter und eine Kennung einer Schnittstelle auf einer Weiterleitungsrouterseite eines Steuermanagementkanals zwischen der Steuervorrichtung und jedem der Weiterleitungsrouter und eine IP-Adresse der Schnittstelle; und
das Folgende auf den wenigstens zwei Weiterleitungsroutern konfiguriert ist: eine Kennung jedes der Weiterleitungsrouter, eine IP-Adresse einer Schnittstelle auf der Steuervorrichtungsseite eines Steuermanagementkanals zwischen jedem der Weiterleitungsrouter und der Steuervorrichtung und eine Kennung einer Schnittstelle auf einer Weiterleitungsrouterseite eines Steuermanagementkanals zwischen jedem der Weiterleitungsrouter und der Steuervorrichtung und eine IP-Adresse der Schnittstelle.

4. System nach Anspruch 1, wobei die wenigstens zwei Weiterleitungsrouter eine Topologie durch eine Standardschnittstelle aufbauen.

5. System nach Anspruch 1, wobei die Steuervorrichtung eine Hauptplatine und eine Verbindungsschnittstellenplatine umfasst; und
dementsprechend das Aufbauen der Steuermanagementkanäle zwischen der Steuervorrichtung und den wenigstens zwei Weiterleitungsroutern insbesondere Folgendes umfasst: Aufbauen von Steuermanagementkanälen zwischen der Verbindungsschnittstellenplatine der Steuervorrichtung und den wenigstens zwei Weiterleitungsroutern.

6. System nach Anspruch 1, wobei die Steuermanagementkanäle auf eine In-Band- oder Out-Band-Weise implementiert sind; und wenn die Steuermanagementkanäle auf eine In-Band-Weise implementiert sind die Steuervorrichtung ferner statische Wege von der Steuervorrichtung zu den wenigstens zwei Weiterleitungsroutern konfigurieren muss; und jeder der wenigstens zwei Weiterleitungsrouter ferner statische Wege von jedem Router zu der Steuervorrichtung konfigurieren muss.

7. System nach Anspruch 1, wobei die Steuervorrichtung insbesondere Folgendes umfasst: ein Weiterleitungsinformationsbasissammelmodul, das konfiguriert ist, Lenkungsinformationen, die durch andere Netzvorrichtungen außerhalb des Systems gesendet werden und durch jede externe Schnittstelle des virtuellen Clusterroutersystems empfangen werden, zu sammeln und zentralisierte Berechnung auszufiihren, um eine externe Lenkungsinformationsbasis eFIB des virtuellen Clusterroutersystems zu erzeugen; und Lenkungsinformationen zwischen jedem der Weiterleitungsrouter und der Steuervorrichtung in dem virtuellen Clusterroutersystem zu sammeln und zentralisierte Berechnung auszuführen, um eine interne Lenkungsinformationsbasis iFIB des virtuellen Clusterroutersystems zu erzeugen, wobei die iFIB Folgendes umfasst: eine Knoten-ID jedes der Weiterleitungsrouter, eine ID einer internen Schnittstelle eines Datenkanals und eine IP-Adresse der internen Schnittstelle, und die eFIB Folgendes umfasst: eine Kennung einer externen Schnittstelle jedes der Weiterleitungsrouter und eine IP-Adresse der externen Schnittstelle;
ein Kombinationsmodul, das konfiguriert ist, die iFIB und die eFIB zu kombinieren, um eine endgültige Weiterleitungsinformationsbasis des virtuellen Clusterroutersystems zu erzeugen; und
ein Sendemodul, das konfiguriert ist, die endgültige Weiterleitungsinformationsbasis des virtuellen Clusterroutersystems über die Steuermanagementkanäle zu den wenigstens zwei Weiterleitungsroutern zu senden.

8. System nach Anspruch 7, wobei das Kombinationsmodul ferner Folgendes umfasst:
eine Weiterleitungsinformationserfassungseinheit, die konfiguriert ist, gemäß Informationen über eine externe Schnittstelle in der eFIB einen Weiterleitungsrouter, in dem sich die externe Schnittstelle befindet, zu erfassen; und Informationen über einen Weg zu dem Weiterleitungsrouter, in dem sich die externe Schnittstelle befindet, aus der iFIB zu erfassen; und
eine Weiterleitungsinformationskombinationseinheit, die konfiguriert ist, eine Zieladresse, die den Informationen über die externe Schnittstelle in der eFIB und den Informationen über den Weg zu dem Weiterleitungsrouter, in dem sich die externe Schnittstelle befindet, in der iFIB entspricht, in eine endgültige Weiterleitungsinformationsbasis des virtuellen Clusterroutersystems zu kombinieren.

9. System nach Anspruch 1, wobei jeder der wenigstens zwei Weiterleitungsrouter ferner Folgendes umfasst: ein Schnittstelleninformationsberichtsmodul, das konfiguriert ist, Schnittstelleninformationen zu der Steuervorrichtung zu berichten, wobei die Schnittstelleninformationen Informationen über alle Schnittstellen, die einen Weiterleitungsrouter und das Äußere des virtuellen Clusterroutersystems verbinden, und Informationen über alle Schnittstellen, die den Weiterleitungsrouter und das Innere des virtuellen Clusterroutersystems verbinden, umfassen; und
die Steuervorrichtung ferner Folgendes umfasst: ein Schnittstellenmanagementmodul, das konfiguriert ist, die Schnittstelleninformationen, die durch die wenigstens zwei Weiterleitungsrouter berichtet werden, zu empfangen und die Schnittstelleninformationen zu speichern.

10. Steuervorrichtung, wobei die Steuervorrichtung auf das in Anspruch 1 beschriebene virtuelle Clusterroutersystem angewandt ist und Steuermanagementkanäle zwischen der Steuervorrichtung und wenigstens zwei Weiterleitungsroutern in dem System aufgebaut sind; die wenigstens zwei Weiterleitungsrouter Kommunikation mit anderen Netzvorrichtungen außerhalb des Systems über jeweilige externe Schnittstellen aufbauen; und
die Steuervorrichtung Folgendes umfasst:
ein Weiterleitungsinformationsbasissammelmodul, das konfiguriert ist, Steuerprotokollinformationen, die durch andere Netzvorrichtungen außerhalb des Systems gesendet werden und durch jede externe Schnittstelle des virtuellen Clusterroutersystems empfangen werden, zu sammeln und zentralisierte Berechnung auszufiihren, um eine externe Lenkungsinformationsbasis des virtuellen Clusterroutersystems zu erzeugen, wobei das virtuelle Clusterroutersystem extern als ein Router in der Steuerprotokollschicht verkörpert ist; und Steuerprotokollinformationen zwischen jedem der Weiterleitungsrouter und der Steuervorrichtung in dem virtuellen Clusterroutersystem zu sammeln und zentralisierte Berechnung auszufiihren, um eine interne Lenkungsinformationsbasis des virtuellen Clusterroutersystems zu erzeugen, wobei das Aufbauen von Steuermanagementkanälen zwischen der Steuervorrichtung und den wenigstens zwei Weiterleitungsroutern insbesondere Folgendes umfasst: Aufbauen von Steuermanagementkanälen zwischen der Steuervorrichtung und den wenigstens zwei Weiterleitungsroutern über einen Verteiler;
ein Kombinationsmodul, das konfiguriert ist, die externe Lenkungsinformationsbasis des Systems und die interne Lenkungsinformationsbasis des Systems zu kombinieren, um eine endgültige Weiterleitungsinformationsbasis zu erzeugen; und ein Sendemodul, das konfiguriert ist, die endgültige Weiterleitungsinformationsbasis über die Steuermanagementkanäle zu den wenigstens zwei Weiterleitungsroutern zu senden.

11. Steuervorrichtung nach Anspruch 10, wobei das Folgende auf der Steuervorrichtung konfiguriert ist: eine Kennung der Steuervorrichtung, eine Kennung einer Schnittstelle auf der Steuervorrichtungsseite eines Steuermanagementkanals zwischen der Steuervorrichtung und jedem der Weiterleitungsrouter und eine IP-Adresse der Schnittstelle, eine Kennung jedes der Weiterleitungsrouter und eine Kennung einer Schnittstelle auf einer Weiterleitungsrouterseite eines Steuermanagementkanals zwischen der Steuervorrichtung und jedem der Weiterleitungsrouter und eine IP-Adresse der Schnittstelle.

12. Steuervorrichtung nach Anspruch 10, wobei die Steuervorrichtung eine Hauptplatine und eine Verbindungsschnittstellenplatine umfasst; und
dementsprechend das Aufbauen der Steuermanagementkanäle zwischen der Steuervorrichtung und den wenigstens zwei Weiterleitungsroutern insbesondere Folgendes umfasst: Aufbauen von Steuermanagementkanälen zwischen der Verbindungsschnittstellenplatine der Steuervorrichtung und den wenigstens zwei Weiterleitungsroutern.

13. Steuervorrichtung nach Anspruch 10, wobei die Steuermanagementkanäle auf eine In-Band- oder Out-Band-Weise implementiert sind; und wenn die Steuermanagementkanäle auf eine In-Band-Weise implementiert sind die Steuervorrichtung ferner statische Wege von der Steuervorrichtung zu den wenigstens zwei Weiterleitungsroutern konfigurieren muss.

14. Steuervorrichtung nach Anspruch 10, wobei das Weiterleitungsinformationsbasissammelmodul insbesondere konfiguriert ist, Lenkungsinformationen, die durch andere Netzvorrichtungen außerhalb des Systems gesendet werden und durch jede externe Schnittstelle des virtuellen Clusterroutersystems empfangen werden, zu sammeln und zentralisierte Berechnung auszufiihren, um eine externe Lenkungsinformationsbasis eFIB des virtuellen Clusterroutersystems zu erzeugen; und Lenkungsinformationen zwischen jedem der Weiterleitungsrouter und der Steuervorrichtung in dem virtuellen Clusterroutersystem zu sammeln und zentralisierte Berechnung auszuführen, um eine interne Lenkungsinformationsbasis iFIB des virtuellen Clusterroutersystems zu erzeugen, wobei die iFIB Folgendes umfasst: eine Knoten-ID jedes der Weiterleitungsrouter, eine ID einer internen Schnittstelle eines Datenkanals und eine IP-Adresse der internen Schnittstelle, und die eFIB Folgendes umfasst: eine Kennung einer externen Schnittstelle jedes der Weiterleitungsrouter und eine IP-Adresse der externen Schnittstelle;
das Kombinationsmodul insbesondere konfiguriert ist, die iFIB und die eFIB zu kombinieren, um eine endgültige Weiterleitungsinformationsbasis des virtuellen Clusterroutersystems zu erzeugen; und
das Sendemodul insbesondere konfiguriert ist, die endgültige Weiterleitungsinformationsbasis des virtuellen Clusterroutersystems über die Steuermanagementkanäle zu den wenigstens zwei Weiterleitungsroutern zu senden.

15. Steuervorrichtung nach Anspruch 14, wobei das Kombinationsmodul ferner Folgendes umfasst:
eine Weiterleitungsinformationserfassungseinheit, die konfiguriert ist, gemäß Informationen über eine externe Schnittstelle in der eFIB einen Weiterleitungsrouter, in dem sich die externe Schnittstelle befindet, zu erfassen; und Informationen über einen Weg zu dem Weiterleitungsrouter, in dem sich die externe Schnittstelle befindet, aus der iFIB zu erfassen; und
eine Weiterleitungsinformationskombinationseinheit, die konfiguriert ist, eine Zieladresse, die den Informationen über die externe Schnittstelle in der eFIB und den Informationen über den Weg zu dem Weiterleitungsrouter, in dem sich die externe Schnittstelle befindet, in der iFIB entspricht, in eine endgültige Weiterleitungsinformationsbasis des virtuellen Clusterroutersystems zu kombinieren.

16. Steuervorrichtung nach Anspruch 10, wobei die Steuervorrichtung ferner Folgendes umfasst: ein Schnittstellenmanagementmodul, das konfiguriert ist, die Schnittstelleninformationen, die durch die wenigstens zwei Weiterleitungsrouter berichtet werden, zu empfangen und die Schnittstelleninformationen zu speichern.

17. Verfahren zum Aufbauen eines virtuellen Clusterroutersystems, wobei das Verfahren auf das in Anspruch 1 beschriebene virtuelle Clusterroutersystem angewandt wird und das virtuelle Clusterroutersystem eine Steuervorrichtung und wenigstens zwei Weiterleitungsrouter umfasst; und
das Verfahren Folgendes umfasst:
Aufbauen von Steuermanagementkanälen zwischen der Steuervorrichtung und den wenigstens zwei Weiterleitungsroutern, wobei das Aufbauen der Steuermanagementkanäle zwischen der Steuervorrichtung und den wenigstens zwei Weiterleitungsroutern insbesondere Folgendes umfasst: Aufbauen von Steuermanagementkanälen zwischen der Steuervorrichtung und den wenigstens zwei Weiterleitungsroutern über einen Verteiler;
Sammeln durch die Steuervorrichtung von Steuerprotokollinformationen, die durch andere Netzvorrichtungen außerhalb des Systems gesendet werden und durch jede externe Schnittstelle des virtuellen Clusterroutersystems empfangen werden, und Ausführen von zentralisierter Berechnung, um eine externe Lenkungsinformationsbasis des virtuellen Clusterroutersystems zu erzeugen; Ausführen durch die Steuervorrichtung von Steuerprotokollkommunikation mit einem weiteren Router außerhalb des Systems für das virtuelle Clusterroutersystem, wobei das virtuelle Clusterroutersystem extern als ein Router in der Steuerprotokollschicht verkörpert ist;
ferner Sammeln durch die Steuervorrichtung von Steuerprotokollinformationen zwischen jedem der Weiterleitungsrouter und der Steuervorrichtung in dem virtuellen Clusterroutersystem und Ausführen von zentralisierter Berechnung, um eine interne Lenkungsinformationsbasis des virtuellen Clusterroutersystems zu erzeugen; und
Kombinieren durch die Steuervorrichtung der externen Lenkungsinformationsbasis des Systems und der internen Lenkungsinformationsbasis des Systems, um eine endgültige Weiterleitungsinformationsbasis zu erzeugen, und Senden der endgültigen Weiterleitungsinformationsbasis über die Steuermanagementkanäle zu den wenigstens zwei Weiterleitungsroutern.

## Revendications

1. Système de routeur de grappes virtuel, comprenant un dispositif de commande et au moins deux routeurs d'acheminement, dans lequel les au moins deux routeurs d'acheminement établissent une communication avec d'autres dispositifs de réseau en dehors du système par le biais d'interfaces externes respectives ;
des canaux de gestion de commande sont établis entre le dispositif de commande et les au moins deux routeurs d'acheminement, l'établissement des canaux de gestion de commande entre le dispositif de commande et les au moins deux routeurs d'acheminement comprenant spécifiquement : l'établissement de canaux de gestion de commande entre le dispositif de commande et les au moins deux routeurs d'acheminement par le biais d'un commutateur ;
le dispositif de commande est configuré pour collecter des informations de protocole de commande qui sont envoyées par d'autres dispositifs de réseau en dehors du système et reçues par chaque interface externe du système de routeur de grappes virtuel, et exécuter un calcul centralisé pour générer une base d'informations de routage externe du système de routeur de grappes virtuel ; le dispositif de commande effectue une communication de protocole de commande avec un autre routeur en dehors du système pour le compte du système de routeur de grappes virtuel, le système de routeur de grappes virtuel étant mis en oeuvre extérieurement comme un seul routeur au niveau de la couche de protocole de commande ;
le dispositif de commande est configuré en outre pour collecter des informations de protocole de commande entre chacun des routeurs d'acheminement et le dispositif de commande dans le système de routeur de grappes virtuel, et effectuer un calcul centralisé pour générer une base d'informations de routage interne du système de routeur de grappes virtuel ; et
le dispositif de commande est configuré pour combiner la base d'informations de routage externe du système et la base d'informations de routage interne du système pour générer une base d'informations d'acheminement finale, et envoie la base d'informations d'acheminement finale aux au moins deux routeurs d'acheminement par le biais des canaux de gestion de commande.

2. Système selon la revendication 1, dans lequel la collecte des informations de protocole de commande qui sont envoyées par d'autres dispositifs de réseau en dehors du système et reçues par chaque interface externe du système de routeur de grappes virtuel comprend spécifiquement :
l'extraction, par les au moins deux routeurs d'acheminement, à la réception d'un message comprenant un protocole de commande, le message étant envoyé depuis l'extérieur du système de routeur de grappes virtuel, d'un identifiant de carte destinataire dans le message, et l'envoi du message au dispositif de commande par le biais des canaux de gestion de commande établis si l'identifiant de carte destinataire se trouve sur le dispositif de commande.

3. Système selon la revendication 1, dans lequel sur le dispositif de commande sont configurés : un identifiant du dispositif de commande, un identifiant d'une interface, du côté du dispositif de commande, d'un canal de gestion de commande entre le dispositif de commande et chacun des routeurs d'acheminement et une adresse IP de l'interface, un identifiant de chacun des routeurs d'acheminement, et un identifiant d'une interface, du côté des routeurs d'acheminement, d'un canal de gestion de commande entre le dispositif de commande et chacun des routeurs d'acheminement et une adresse IP de l'interface : et
sur les au moins deux routeurs d'acheminement sont configurés : un identifiant de chacun des routeurs d'acheminement, une adresse IP d'une interface, du côté du dispositif de commande, d'un canal de gestion de commande entre chacun des routeurs d'acheminement et le dispositif de commande, et un identifiant d'une interface, du côté des routeurs d'acheminement, d'un canal de gestion de commande entre chacun des routeurs d'acheminement et le dispositif de commande et une adresse IP de l'interface.

4. Système selon la revendication 1, dans lequel les au moins deux routeurs d'acheminement établissent une topologie par le biais d'une interface standard.

5. Système selon la revendication 1, dans lequel le dispositif de commande comprend une carte principale et une carte d'interface d'interconnexion ; et
en conséquence, l'établissement des canaux de gestion de commande entre le dispositif de commande et les au moins deux routeurs d'acheminement comprend spécifiquement : l'établissement de canaux de gestion de commande entre la carte d'interface d'interconnexion du dispositif de commande et les au moins deux routeurs d'acheminement.

6. Système selon la revendication 1, dans lequel les canaux de gestion de commande sont mis en oeuvre dans la bande ou hors bande, et quand les canaux de gestion de commande sont mis en oeuvre dans la bande, le dispositif de commande doit configurer en outre des routes statiques depuis le dispositif de commande jusqu'aux au moins deux routeurs d'acheminement ; et chacun des au moins deux routeurs d'acheminement doit configurer en outre des routes statiques depuis chaque routeur jusqu'au dispositif de commande.

7. Système selon la revendication 1, dans lequel le dispositif de commande comprend spécifiquement : un module de collecte de base d'informations d'acheminement configuré pour collecter des informations de routage qui sont envoyées par d'autres dispositifs de réseau en dehors du système et reçues par chaque interface externe du système de routeur de grappes virtuel, et effectuer un calcul centralisé pour générer une base d'informations de routage externe eFIB du système de routeur de grappes virtuel ; et collecter des informations de routage entre chacun des routeurs d'acheminement et le dispositif de commande dans le système de routeur de grappes virtuel, et exécuter un calcul centralisé pour générer une base d'informations de routage interne iFIB du système de routeur de grappes virtuel, l'iFIB comprenant : un ID de noeud de chacun des routeurs d'acheminement, un ID d'une interface interne d'un canal de données, et une adresse IP de l'interface interne, et l'eFIB comprend :
un identifiant d'une interface externe de chacun des routeurs d'acheminement et une adresse IP de l'interface externe ;
un module de combinaison, configuré pour combiner l'iFIB et l'eFIB pour générer une base d'informations d'acheminement finale du système de routeur de grappes virtuel ; et
un module d'envoi, configuré pour envoyer la base d'informations d'acheminement finale du système de routeur de grappes virtuel aux au moins deux routeurs d'acheminement par le biais des canaux de gestion de commande.

8. Système selon la revendication 7, dans lequel le module de combinaison comprend en outre :
une unité d'acquisition d'informations d'acheminement, configurée pour acquérir, en fonction d'informations relatives à une interface externe dans l'eFIB, un routeur d'acheminement où se trouve l'interface externe ; et acquérir des informations relatives à une route jusqu'au routeur d'acheminement où se trouve l'interface externe depuis l'iFIB ; et
une unité de combinaison d'informations d'acheminement, configurée pour combiner une adresse destinataire correspondant aux informations relatives à l'interface externe dans l'eFIB et les informations relatives à la route jusqu'au routeur d'acheminement où se trouve l'interface externe dans l'iFIB dans une base d'informations d'acheminement finale du système de routeur de grappes virtuel.

9. Système selon la revendication 1, dans lequel chacun des au moins deux routeurs d'acheminement comprend en outre : un module de notification d'informations d'interface, configuré pour notifier des informations d'interface au dispositif de commande, les informations d'interface comprenant des informations relatives à toutes les interfaces connectant un routeur d'acheminement et l'extérieur du système de routeur de grappes virtuel, et des informations relatives à toutes les interfaces connectant le routeur d'acheminement et l'intérieur du système de routeur de grappes virtuel ; et
le dispositif de commande comprend en outre : un module de gestion d'interface, configuré pour recevoir les informations d'interface notifiées par les au moins deux routeurs d'acheminement et sauvegarder les informations d'interface.

10. Dispositif de commande, le dispositif de commande étant appliqué au système de routeur de grappes virtuel décrit à la revendication 1, dans lequel des canaux de gestion de commande sont établis entre le dispositif de commande et au moins deux routeurs d'acheminement dans le système ; les au moins deux routeurs d'acheminement établissent une communication avec d'autres dispositifs de réseau en dehors du système par le biais d'interfaces externes respectives ; et
le dispositif de commande comprenant :
un module de collecte de base d'informations d'acheminement, configuré pour collecter des informations de protocole de commande qui sont envoyées par d'autres dispositifs de réseau en dehors du système et reçues par chaque interface externe du système de routeur de grappes virtuel, et exécuter un calcul centralisé pour générer une base d'informations de routage externe du système de routeur de grappes virtuel,
le système de routeur de grappes virtuel étant mis en oeuvre extérieurement comme un seul routeur au niveau de la couche de protocole de commande ; et collecter des informations de protocole de commande entre chacun des routeurs d'acheminement et le dispositif de commande dans le système de routeur de grappes virtuel, et
effectuer un calcul centralisé pour générer une base d'informations de routage interne du système de routeur de grappes virtuel, l'établissement des canaux de gestion de commande entre le dispositif de commande et les au moins deux routeurs d'acheminement comprenant spécifiquement : l'établissement de canaux de gestion de commande entre le dispositif de commande et les au moins deux routeurs d'acheminement par le biais d'un commutateur ;
un module de combinaison, configuré pour combiner la base d'informations de routage externe du système et la base d'informations de routage interne du système pour générer une base d'informations d'acheminement finale ; et
un module d'envoi, configuré pour envoyer la base d'informations d'acheminement finale aux au moins deux routeurs d'acheminement par le biais des canaux de gestion de commande.

11. Dispositif de commande selon la revendication 10, sur le dispositif de commande étant configurés : un identifiant du dispositif de commande, un identifiant d'une interface, du côté du dispositif de commande, d'un canal de gestion de commande entre le dispositif de commande et chacun des routeurs d'acheminement et une adresse IP de l'interface, un identifiant de chacun des routeurs d'acheminement, et un identifiant d'une interface, du côté des routeurs d'acheminement, d'un canal de gestion de commande entre le dispositif de commande et chacun des routeurs d'acheminement et une adresse IP de l'interface.

12. Dispositif de commande selon la revendication 10, dans lequel le dispositif de commande comprend une carte principale et une carte d'interface d'interconnexion ;
et
en conséquence, l'établissement des canaux de gestion de commande entre le dispositif de commande et les au moins deux routeurs d'acheminement comprend spécifiquement : l'établissement de canaux de gestion de commande entre la carte d'interface d'interconnexion du dispositif de commande et les au moins deux routeurs d'acheminement.

13. Dispositif de commande selon la revendication 10, dans lequel les canaux de gestion de commande sont mis en oeuvre dans la bande ou hors bande ; et quand les canaux de gestion de commande sont mis en oeuvre dans la bande, le dispositif de commande doit configurer en outre des routes statiques depuis le dispositif de commande jusqu'aux au moins deux routeurs d'acheminement.

14. Dispositif de commande selon la revendication 10, dans lequel le module de collecte de base d'informations d'acheminement est configuré spécifiquement pour collecter des informations de routage qui sont envoyées par d'autres dispositifs de réseau en dehors du système et reçues par chaque interface externe du système de routeur de grappes virtuel, et effectuer un calcul centralisé pour générer une base d'informations de routage externe eFIB du système de routeur de grappes virtuel ; et collecter des informations de routage entre chacun des routeurs d'acheminement et le dispositif de commande dans le système de routeur de grappes virtuel, et exécuter un calcul centralisé pour générer une base d'informations de routage interne iFIB du système de routeur de grappes virtuel, l'iFIB comprenant : un ID de noeud de chacun des routeurs d'acheminement, un ID d'une interface interne d'un canal de données, et une adresse IP de l'interface interne, et l'eFIB comprenant : un identifiant d'une interface externe de chacun des routeurs d'acheminement et une adresse IP de l'interface externe ;
le module de combinaison est configuré spécifiquement pour combiner l'iFIB et l'eFIB pour générer une base d'informations d'acheminement finale du système de routeur de grappes virtuel ; et
le module d'envoi est configuré spécifiquement pour envoyer la base d'informations d'acheminement finale du système de routeur de grappes virtuel aux au moins deux routeurs d'acheminement par le biais des canaux de gestion de commande.

15. Dispositif de commande selon la revendication 14, dans lequel le module de combinaison comprend en outre :
une unité d'acquisition d'informations d'acheminement, configurée pour acquérir, en fonction d'informations relatives à une interface externe dans l'eFIB, un routeur d'acheminement où se trouve l'interface externe ; et acquérir des informations relatives à une route jusqu'au routeur d'acheminement où se trouve l'interface externe depuis l'iFIB ; et
une unité de combinaison d'informations d'acheminement, configurée pour combiner une adresse destinataire correspondant aux informations relatives à l'interface externe dans l'eFIB et les informations relatives à la route jusqu'au routeur d'acheminement où se trouve l'interface externe dans l'iFIB dans une base d'informations d'acheminement finale du système de routeur de grappes virtuel.

16. Dispositif de commande selon la revendication 10, le dispositif de commande comprenant en outre : un module de gestion d'interface, configuré pour recevoir les informations d'interface notifiées par les au moins deux routeurs d'acheminement et sauvegarder les informations d'interface.

17. Procédé d'établissement d'un système de routeur de grappes virtuel, le procédé étant appliqué au système de routeur de grappes virtuel décrit à la revendication 1, et le système de routeur de grappes virtuel comprenant un dispositif de commande et au moins deux routeurs d'acheminement ; et
le procédé comprenant :
l'établissement de canaux de gestion de commande entre le dispositif de commande et les au moins deux routeurs d'acheminement, l'établissement des canaux de gestion de commande entre le dispositif de commande et les au moins deux routeurs d'acheminement comprenant spécifiquement : l'établissement de canaux de gestion de commande entre le dispositif de commande et les au moins deux routeurs d'acheminement par le biais d'un commutateur ;
la collecte, par le dispositif de commande, d'informations de protocole de commande qui sont envoyées par d'autres dispositifs de réseau en dehors du système et reçues par chaque interface externe du système de routeur de grappes virtuel, et l'exécution d'un calcul centralisé pour générer une base d'informations de routage externe du système de routeur de grappes virtuel ; l'exécution, par le dispositif de commande,
d'une communication de protocole de commande avec un autre routeur en dehors du système pour le compte du système de routeur de grappes virtuel, le système de routeur de grappes virtuel étant mis en oeuvre extérieurement comme un seul routeur au niveau de la couche de protocole de commande ;
la collecte en outre, par le dispositif de commande, d'informations de protocole de commande entre chacun des routeurs d'acheminement et le dispositif de commande dans le système de routeur de grappes virtuel, et l'exécution d'un calcul centralisé pour générer une base d'informations de routage interne du système de routeur de grappes virtuel ; et
la combinaison, par le dispositif de commande, de la base d'informations de routage externe du système et de la base d'informations de routage interne du système pour générer une base d'informations d'acheminement finale, et l'envoi de la base d'informations d'acheminement finale aux au moins deux routeurs d'acheminement par le biais des canaux de gestion de commande.
